# NEW EUROPEAN PATENT SPECIFICATION

(11) **EP 1 457 107 B3**
(45) Date of publication of this specification: **09.05.2012**
(45) Mention of the grant of the patent: 27.09.2006
(21) Application number: 03256690.3
(22) Date of filing: 23.10.2003
(51) Int. Cl.: A01G 31/00

(54) **Use of a plant growing medium in a method of cultivating plants**
Verwendung eines Pflanzenzuchtmediums in ein Verfahren zum Züchten von Pflanzen
Utilisation d'un milieu de culture pour plantes dans une méthode de culture de plantes

(30) Priority: 08.03.2003 GB 0305394
(43) Date of publication of application: 15.09.2004
(73) Proprietor: Ekofibre Limited, Deeside, Flintshire CH5 2LA (GB)
(72) Inventor: Masson, Norman Garbutt, Cheshire, WA6 6RG (GB)
(74) Representative: W.P. Thompson & Co.

(56) References cited:
- EP-A- 0 147 349
- EP-A- 0 947 130
- EP-A- 1 210 866
- FR-A- 2 537 570
- US-A- 5 087 400

## Description

The present invention relates to plant growing media, plant growing containers, such as blocks, bags and the like, systems comprising such media and/or containers and methods of cultivating plants using such media, containers and systems. In particular, the present invention relates to their use in cultivating seeds, seedlings and/or crops.

Conventional plant growing containers, such as growing bags, are commonly used in horticulture, particularly for tomatoes, peppers, cucumbers, flowering plants and the like. Typically, a conventional plant growing bag comprises a pillow-shaped or bolster-shaped sack or bag made of a flexible plastics material and containing a plant growing medium. In use the growing bags are placed on the floor of a greenhouse or the like and plants are grown through holes cut in the top wall of the bag.

Field soils are generally unsatisfactory for use as a plant growing medium for the production of plants in growing bags. This is primarily because such soils do not provide the aeration, drainage and water holding capacity required. Typically used in such containers are peat-based composts. Peats are formed by the accumulation of plant materials in poorly drained areas. The type of plant material and the degree of decomposition largely determine its value for use as a growing medium. Consequently, the growing medium in one container can differ significantly from that in another in terms of its physical and chemical characteristics eg. pH, density, moisture content etc. It is therefore difficult for a horticulturist to accurately and uniformly control the conditions under which plants grow.

More recently, manufacturers of plant growing media, growing bags and the like have sought to overcome the drawbacks associated with such conventional growing media and growing bags.

Rock wool is widely used as a plant growing media owing to its inert characteristics with respect to a growing plant, sterility which provides a long shelf life and ideal physical properties (aeration, water retention, drainage etc.). Nutrients etc. are simply added to the growth media and the conditions under which a plant can grow can thereby be more accurately controlled particularly when grown in a closed environment e.g. a green house.

However, rock wool is an environmental hazard, since it is difficult and expensive to recycle, and a health hazard. Long term or repeated exposure to rock wool may lead to a sore throat, laboured breathing, irritation to the skin and the eyes and may therefore require breathing protection and protective clothing when handled by manufacturers or in situ by horticulturists.

Known plant growing systems typically comprise the steps of planting seeds in seed-starting trays filled with a peat-based compost or the like to allow the seeds to germinate; removing individual seedling plants together with their root system and a small quantity of peat-based compost and transplanting them into individual growing cells containing potting soil or the like; and, once the seedlings are established, transplanting them to growing bags containing plant growing medium to develop into mature plants.

Clearly, the advantages of using rock wool as a plant growing medium in growing bags or seed-starting trays in such systems are diminished because, unlike peat-based compost, rock wool is not biodegradable and can be a health hazard.

It is therefore an object of the present invention to alleviate or overcome one or more of the problems associated with the prior art.

In accordance with a first aspect of the present invention there is provided the use of a plant growing medium consisting of lignocellulose fibres at least partially coated with lignin, in a method of cultivating plants.

A plant growing medium comprising lignocellulose fibres is disclosed in EP 1 210 866 A.

Lignocellulose fibres are biodegradable and can be subsequently used for general composting once mature plants grown therein have been removed or their crop harvested. Recycling is straight forward and inexpensive. Furthermore, the growth medium has the desired physical characteristics eg. aeration, drainage and water holding capacity without the health and environmental hazards associated with the prior art. Additionally, the shelf life of the growing medium is extended by virtue of the lignin coating which inhibits to some extent the absorbtion by the fibres of rotting agents, such as Nitrogen.

The fibres may be substantially coated with lignin.

In one embodiment, the fibres are partially coated with lignin.

The fibres maybe pre-formed into one or more discrete units. Preferably, the fibres are pre-formed into blocks. The blocks may be cuboid in shape.

The discrete units may be formed from a single mass of fibres or a plurality of lamina each of which comprises a mass of fibres. Preferably, the discrete units are formed from a single mass of fibres.

In one embodiment the discrete units have substantially uniform properties with respect to one another, such as density.

The fibres may be oriented substantially parallel to the plane of the top face of the block or orientated substantially perpendicular to the plane of the top face of the block. Orientation of the fibres predisposes the roots of a plant to extend substantially in the same plane as the orientation of the fibres i.e. fibres orientated substantially parallel to the plane of the top face of the block predisposes the roots of a plant to travel substantially in a plane parallel to the plane of the top face of the block; and, fibres orientated substantially perpendicular to the plane of the top face of the block predisposes the roots of a plant to travel substantially in a plane perpendicular to the plane of the top face of the block.

In one embodiment, the fibres are randomly orientated.

Preferably, the fibres have an average dry density in the range of 30 to 100 g/l, more preferably an average density in the range of 50 to 70 g/l.

In a further embodiment, the fibres in a discrete unit comprise a mixture of fibres having dry densities in the range of 30 to 100 g/l and fibres having dry densities in the range of 50 to 70 g/l.

The raw material for the fibre may be manufactured from wood fibres, wood chips and/or the pulp of fresh wood. Preferably, the raw material is crushed mechanically to obtain the fibres.

The discrete units may comprise adhesive means and/or a chemical binder for adhering fibres to one another. The adhesive means may comprise one or more synthetic fibres and/or one or more adhesive particles. Preferably, the adhesive means comprises one or more synthetic fibres. The synthetic fibre and/or adhesive particles act as an adhesive to facilitate formation of the discrete units and to maintain the discrete units in their formed shape in addition to providing mechanical strength.

The one or more synthetic fibres may comprise plastics fibres. Preferably, the synthetic fibre comprises a bicomponent fibre. More preferably, the synthetic fibre comprises a core of polyester and a sheath of polyethylene.

The adhesive means may be activated by treating with heat and/or with pressure and/or UV curing. More preferably, the adhesive means is heat activated. In one embodiment, where the adhesive means comprises a bicomponent fibre having a polyester core and a polyethylene sheath the polyester core has a very high melting point whereas the polyethylene sheath melts at 127°C, sticks to the fibres and sets when cool following heat treatment above 127°C.

Nutrients, plant hormones, herbicides, fungicides, pesticides or any other compositions which are used against animals, insects, bacteria, fungi or the like may be added to the growing medium.

The discrete units may comprise a sleeve. In use the sleeve may extend around the sides of a discrete unit. In use such a sleeve may prevent the roots of a plant extending beyond the sleeve. The sleeve is preferably manufactured from plastics, such as polyethylene, PVC or the like.

Manufacture of material for the discrete units is substantially described in DE 100 56 829 which discloses the manufacture of insulating material whereby material is pressed by way of a mechanical mixing of plant fibre and synthetic fibre, forming an endless mat, drying and bonding of the mat using hot air.

In accordance with a second aspect of the present invention there is provided the use of a plant growing container containing plant growing medium as described hereinabove.

The plant growing medium preferably comprises loose fibres. The term 'loose fibres' used herein is intended to mean fibres wherein the adhesive means is not activated. More preferably the plant growing medium does not comprise adhesive means.

The container is preferably an elongate, closed container.

Preferably, the container is sealed by two transverse seals.

The container may be manufactured from a flexible material. Preferably, the container is manufactured from flexible sheet material. More preferably, the container is manufactured from plastics. Even more preferably, the container is manufactured from polyethylene, polypropylene, polyvinylchloride, and/or any other suitable synthetic resin. Even more preferably still, the container is made from polyethylene.

The container may be coloured to reflect light when growing plants.

The thickness of flexible sheet material is preferably 20 to 50µm.

The container may be an elongated envelope, bag, sack or the like.

The container may be bolster-shaped or pillow-shaped.

The container may have rectangular, circular or elliptical cross-section.

The container preferably contains plant growing medium wherein the lignocellulose fibres are randomly orientated.

Preferably, the container does not contain plant growing medium comprising adhesive means.

The container preferably comprise plant growing medium which consists of lignocellulose fibres without the addition of auxiliary substances such as fertilizers, nutrients, pesticides, plant hormones, fungicides, herbicides or any other substances which are used against animals, insects, bacteria, fungi or the like.

The dimensions of the container may be varied over wide ranges to suit the type of plant which is intended to be grown in it.

Preferably, the plant growing medium substantially fills the container.

The container may be sealed by any suitable means including stitching, stapling, an adhesive and/or heat sealing etc.

The seal is preferably made by heat sealing using a linear heat seal such as a bar heat sealer. Sealing the container ensures that the contents are kept dry, clean and sterile.

The container may be formed by any suitable method e.g. sealing one end of the container, filling the container to the desired extent, closing the open end of the container and sealing the open end.

The container may comprise pre-cut and/or perforated apertures which have been provided with a temporary closure, such as a closure strip of plastic, which may be gummed or spot welded over the aperture to seal it. The temporary closure may subsequently be removed when the container is in position for use.

In accordance with a further aspect of the present invention, there is provided a system for cultivating plants comprising the use of a plant growing container as described hereinabove and a plant growing medium pre-formed into one or more discrete units as described hereinabove.

The plant growing medium as described hereinabove may be manufactured in a method comprising drying lignocellulose fibres such that the fibre has a moisture content of less than about 15% and the fibres are at least partially coated with lignin.

Preferably, drying of the fibres is conducted at a temperature of at least 100°C.

The method may comprise the pre-step of mechanically crushing wood fibre, woodchips and/or the pulp of fresh wood.

Preferably, the fibres may have a moisture content less than about 15% by weight, preferably in the range of about 10-14%, more preferably about 12%. As a consequence of drying the fibres as disclosed herein, lignin disposed within the fibres at least partially coat the fibres.

The fibres may be subsequently admixed with adhesive means to form discrete units as described hereinabove. The formation of discrete units in the form of one lamina ensures that the discrete units in each batch have uniform properties.

In accordance with a further aspect of the present invention, there is provided a method for cultivating plants comprising the use of a plant growing medium as described hereinabove pre-formed into one or more discrete units, the method comprising the step of placing one or more seeds, seedlings and /or plants within the one or more discrete units.

In accordance with a further aspect of the present invention, there is provided a method for cultivating plants comprising the use of a plant growing container as described hereinabove, the method comprising the steps of:
i) forming an aperture in the plant growing container; and
ii) placing one or more seeds, seedlings and/or plants on the plant growing medium exposed by forming an aperture in the container

In accordance with a further aspect of the present invention there is provided a method for cultivating plants comprising the use of a system as described hereinabove, the method comprising the steps of:
i) forming an aperture in the plant growing container; and
ii) positioning plant growing medium pre-formed into one or more discrete units such that the one or more discrete units overlie at least a portion of the aperture.

The plant growing medium as described hereinabove may consist of lignocellulose fibres as described hereinabove at least partially coated with lignin.

Specific embodiments of the present invention will now be described, by way of example only, in which:
Fig. 1 illustrates a growing block in accordance with the present invention;
Fig. 2 illustrates a seedling cultivated in a growing block in accordance with the present invention;
Fig. 3 illustrates a container/growing bag in accordance with the present invention; and
Fig. 4 illustrates a mature plant cultivated in a system in accordance with the present invention.

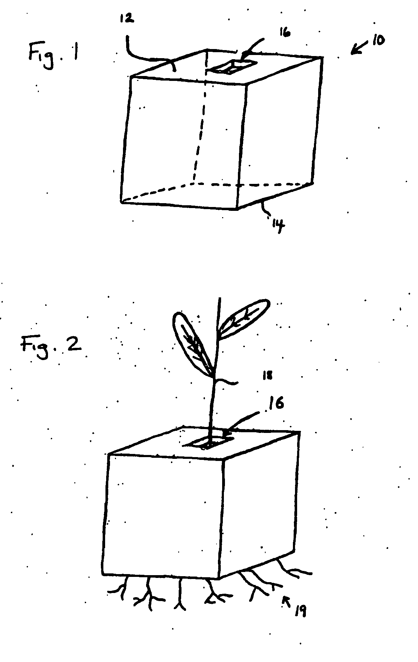

Fig. 1 shows a substantially cuboid growing block 10 having a top face 12 and bottom face 14. Disposed in top face 12 is a square recess 16 for receiving a seed/seedling.

Fig. 2 shows growing block 10 with a seedling 18 with roots 19 extending through block 10, the seedling 18 received in recess 16.

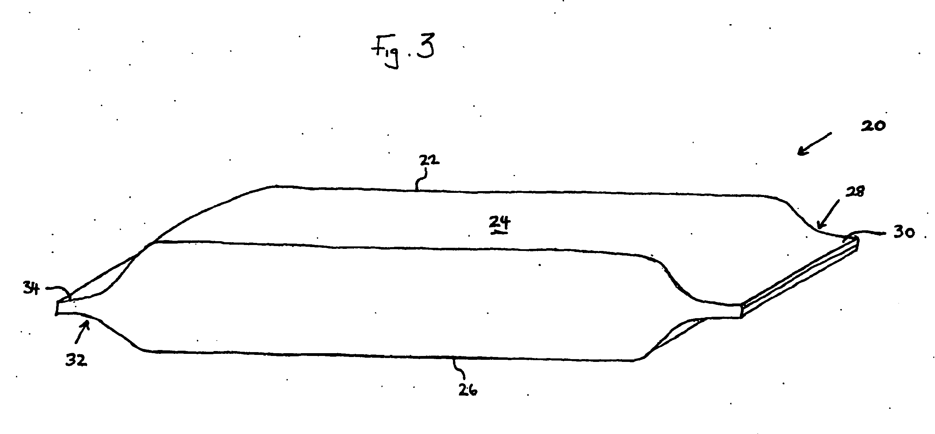

Fig. 3 shows plant growing container 20 having rectangular cross-section and an elongate rectangular body 22 having an upper and lower 24, 26. The container has a transverse linear seal 28 at one end. The seal 28 is set back from the end of the bag to leave a narrow strip of container wall 30 beyond seal 28 and is made using a bar heat sealer. The container 20 contains 90% by sealed volume of plant growth medium. The other end of container 20 also has a transverse linear seal 32 having a narrow strip of container wall 34 beyond.

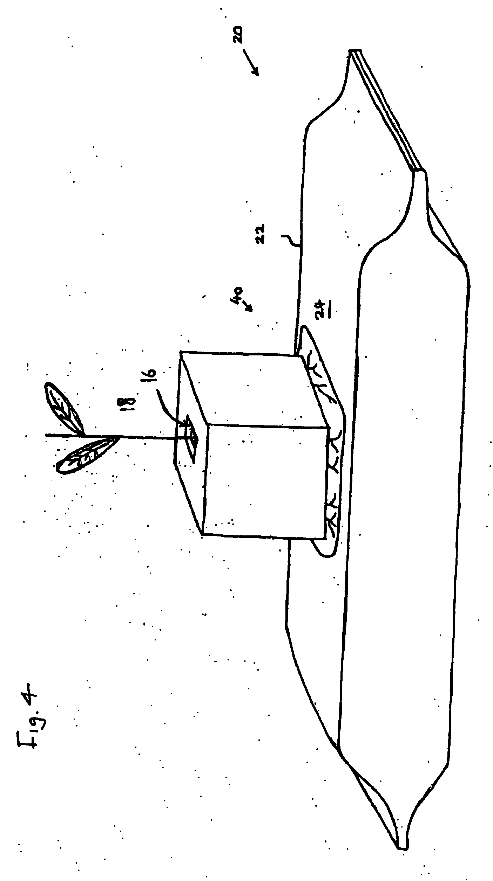

In use (Fig. 4) the container is laid down at the site of use, for example, on the ground or on the staying of a greenhouse, and the uppermost wall 24 of the container 20 is cut at the selected position to form an aperture 40 of the desired size corresponding to surface area of the bottom face 14 of a block 10. The aperture 40 is typically 10cm² and formed by cutting a square portion of the container wall 24.

The block 10 having an established seedling 40 disposed thereon can then be positioned in place such that the block 10 substantially overlies the aperture formed in container 20 and secured using any suitable means, such as string. Alternatively, seeds, seedlings and/or plants can simply be cultivated in container 20 by placing the seed, seedling and/or plant in the growing medium exposed following the formation of an aperture in the container wall or simply cultivated on block 10. Throughout the cultivation of the plant nutrients, pesticides, herbicides, plant hormones, fungicides, bactericides and the like are supplied, typically in solution, to the growing block 10 and/or the growing medium in container 20 through which the plant's root system has developed.

## Claims

1. Use of a plant growing medium consisting of lignocellulose fibres at least partially coated with lignin, in a method of cultivating plants.

2. Use as claimed in claim 1 wherein the fibres are substantially coated with lignin.

3. Use as claimed in claim 1 or 2 wherein the fibres are formed into one or more discrete units.

4. Use as claimed in claim 3 wherein the discrete units are cuboidal in shape having top, bottom, front, rear and two side faces.

5. Use as claimed in claim 3 or 4 wherein the units are formed from a plurality of lamina each of which comprises a mass of lignocellulose fibres.

6. Use as claimed in claims 4 or 5 wherein the lignocellulose fibres are orientated substantially perpendicularly to the plane of the top face of the discrete unit.

7. Use as claimed in any one of the preceding claims wherein the average dry density of the lignocellulose fibres is in the range 30 to 100 g/l.

8. Use as claimed in any one of claims 1 to 7 wherein lignocellulose fibres are adhered to one another with adhesive means and/or a chemical binder.

9. Use as claimed in claim 8 wherein the adhesive means comprises one or more synthetic fibres and/or one or more particles.

10. Use as claimed in claim 9 wherein the adhesive means comprises a bicomponent fibre.

11. Use as claimed in claim 10 wherein the bicomponent fibre comprises a polyester core and a polyethylene sheath.

12. Use as claimed in any one of the previous claims wherein the method of cultivating plants also uses one or more selected from the group comprising nutrients, plant hormones, herbicides, fungicides and pesticides.

13. Use as claimed in any one of the preceding claims wherein the plant growing medium is contained in a plant growing container.

14. A method for cultivating plants comprising the use of a plant growing medium as claimed in claim 13 further comprising the steps of:
i) forming an aperture in the plant growing container; and
ii) placing one or more seeds, seedlings and/or plants on or in the plant growing medium.

## Patentansprüche

1. Verwendung eines Pflanzennährmedium, das aus Lignozellulosefasern besteht, die zumindest teilweise mit Lignin beschichtet sind, bei einem Verfahren zum Züchten von Pflanzen.

2. Verwendung nach Anspruch 1, bei der die Fasern im wesentlichen mit Lignin beschichtet sind.

3. Verwendung nach Anspruch 1 oder 2, bei der die Fasern zu einer oder mehreren getrennten Einheiten ausgebildet sind.

4. Verwendung nach Anspruch 3, bei der die getrennten Einheiten kubischer Form sind und eine obere, untere, vordere, hintere und zwei Seitenflächen aufweisen.

5. Verwerdung nach Anspruch 3 oder 4, bei der die Einheiten aus einer Mehrzahl von Schichten gebildet werden, von denen jede eine Masse von Lignozellulosefasern aufweist.

6. Verwendung nach Anspruch 4 oder 5, bei der die Lignozellulosefasern im wesentlichen senkrecht zu der Ebene der oberen Fläche der getrennten Einheit ausgerichtet sind.

7. Verwendung nach einem der vorhergehenden Ansprüche, bei der die mittlere Trockendichte der Lignozellulosefasern im Bereich von 30 bis 100 g/l liegt.

8. Verwendung nach einem der Ansprüche 1 is 7, bei der Lignozellulosefasern mit einem Klebemittel und/oder einem chemischen Bindemittel aneinander angehaftet sind.

9. Verwendung nach Anspruch 8, bei der das Klebemittel eine oder mehrere Kunstfasern und/oder ein oder mehrere Partikeln aufweist.

10. Verwendung nach Anspruch 9, bei der das Klebemittel eine Zweikomponentenfaser aufweist.

11. Verwendung nach Anspruch 10, bei der die Zweikomponentenfaser einen Polyesterkern und eine Polyethylenhülle aufweist.

12. Verwendung nach einem der vorhergehenden Ansprüche, bei der das Verfahren zum Züchten von Pflanzen auch einen oder mehrere Stoffe ausgewählt aus der Gruppe verwendet, die Nährstoffe, Pflanzenhormone, Herbizide, Fungizide und Pestizide einschließt.

13. Verwerdung nach einem der vorhergehenden Ansprüche, bei der das Pflanzennährmedium in einem Pflanzennährbehälter enthalten ist.

14. Verfahren zum Züchten von Pflanzen, das die Verwendung eines wie in Anspruch 13 beanspruchten Pflanzennährmediums aufweist, wobei das Verfahren weiter die folgenden Schritte aufweist:
i) Ausbilden einer Öffnung in dem Pflanzennährbehälter; und
ii) Legen eines oder mehrerer Samen, Setzlinge und/oder Pflanzen auf oder in das Pflanzennährmedium.

## Revendications

1. Utilisation d'un milieu de culture de plantes composé de fibres de lignocellulose au oins partiellement enduites de lignine, dans une méthode de culture de plantes.

2. Utilisation telle que revendiquée dans la revendication 1, les fibres étant essentiellement enduites de lignine.

3. Utilisation telle que revendiquée dans la revendication 1 ou 2, les fibres étant formées en une ou plusieurs unités distinctes.

4. Utilisation telle que revendiquée dans la revendication 3, les unités distinctes étant de forme cuboïde ayant des faces supérieure, inférieure, avant, arrière ainsi que eux faces latérales.

5. Utilisation telle que revendiquée dans la revendication 3 ou 4, les unités étant formées à partir d'une pluralité de lamelles dont chacune comprend une masse de fibres de lignocellulose.

6. Utilisation telle que revendiquée dans la revendication 4 ou 5, les fibres de lignocellulose étant orientées essentiellement perpendiculairement au plan de la face supérieure de l'unité distincte.

7. Utilisation telle que revendiquée dans l'une quelconque des revendications précédentes, la densité sèche moyenne des fibres de lignocellulose étant située dans la plage allant de 30 à 100 g/ℓ.

8. Utilisation telle que revendiquée dans l'une quelconque des revendications 1 à 7, les fibres de lignocellulose étant adhérées l'une à l'autre par un moyen adhésif et/ou un liant chimique.

9. Utilisation telle que revendiquée dans la revendication 8, le moyen adhésif comprenant une ou plusieurs fibres synthétiques et/ou une ou plusieurs particules.

10. Utilisation telle que revendiquée dans la revendication 9, le moyen adhésif comprenant une fibre bicomposée.

11. Utilisation telle que revendiquée dans la revendication 10, la fibre bicomposée comprenant un noyau en polyester et une gaine en polyéthylène.

12. Utilisation telle que revendiquée dans l'une quelconque des revendications précédentes, la méthode de culture de plantes également utilisant un ou plusieurs éléments sélectionnés parmi le groupe comprenant des nutriments, des phytohormones, des herbicides, des fongicides et des pesticides.

13. Utilisation telle que revendiquée dans l'une quelconque des revendications précédentes, le milieu de culture de plantes se trouvant dans un récipient de culture de plantes.

14. Méthode de culture de plantes comprenant l'utilisation d'un milieu de culture de plantes telle que revendiquée dans la revendication 13, comprenant en outre les opérations suivantes:
i) la formation d'une ouverture dans le récipient de culture de plantes ; et
ii) la mise en place d'une ou de plusieurs semences, semis et/ou plantes sur ou dans le milieu de culture de plantes.
